(19) Europäisches Patentamt / European Patent Office / Office européen des brevets

(11) **EP 4 253 326 A1**

(12) **EUROPEAN PATENT APPLICATION**
published in accordance with Art. 153(4) EPC

(43) Date of publication:
**04.10.2023 Bulletin 2023/40**

(21) Application number: **21896595.2**

(22) Date of filing: **13.10.2021**

(51) International Patent Classification (IPC):
*C01G 53/00* (2006.01)       *H01M 4/505* (2010.01)
*H01M 4/525* (2010.01)       *H01M 10/0525* (2010.01)

(52) Cooperative Patent Classification (CPC):
Y02E 60/10

(86) International application number:
**PCT/CN2021/123409**

(87) International publication number:
**WO 2022/111093 (02.06.2022 Gazette 2022/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.11.2020 CN 202011364568**

(71) Applicants:
• **Guangdong Brunp Recycling Technology Co., Ltd**
**Foshan, Guangdong 528137 (CN)**
• **Hunan Brunp Recycling Technology Co., Ltd.**
**Changsha, Hunan 410600 (CN)**
• **Hunan Brunp EV Recycling Co., Ltd.**
**Changsha, Hunan 410600 (CN)**

(72) Inventors:
• **ZHAO, Wenyu**
**Foshan, Guangdong 528137 (CN)**
• **RUAN, Dingshan**
**Foshan, Guangdong 528137 (CN)**
• **LIU, Jingjing**
**Foshan, Guangdong 528137 (CN)**
• **HUANG, Guohan**
**Foshan, Guangdong 528137 (CN)**
• **XIA, Yang**
**Foshan, Guangdong 528137 (CN)**
• **LI, Changdong**
**Foshan, Guangdong 528137 (CN)**

(74) Representative: **Meyer, Thorsten**
**Meyer Patentanwaltskanzlei**
**Pfarrer-Schultes-Weg 14**
**89077 Ulm (DE)**

(54) **TERNARY POSITIVE ELECTRODE MATERIAL, PREPARATION METHOD THEREFOR AND USE THEREOF**

(57)    The present disclosure belongs to the field of battery materials, and discloses a ternary cathode material and a preparation method and application thereof. The ternary cathode material has a chemical formula of $LiNi_xCo_yMn_{(1-x-y)}MO_2$, wherein $0.5 \leq x \leq 1$, $y \geq 0$, M is at least one selected from the group of niobium, boron and titanium. In the present disclosure, through the reaction between the niobium compound, the boron compound or the titanium compound with the residual lithium on the surface of the calcinated materials, the micro powder deposits in the defect position of the lithium crystal lattice on the surface of the calcinated material, so that the content of the micro powder can be greatly reduced. Meanwhile part of the surface residual lithium is consumed by the reaction to generate lithium niobate, lithium borate or lithium titanate which is uniformly coated on the surface of the material, thereby obtaining the ternary cathode material with excellent cycle and rate performance.

图 1

**Description**

**TECHNICAL FIELD**

The present disclosure belongs to the field of lithium ion battery materials, and in particular to a ternary cathode material, a preparation method and application thereof.

**BACKGROUND**

In the field of electric automobiles, the endurance mileage of electric automobiles is generally concerned. With increasing occurrence of various spontaneous combustion events of electric automobiles, the safety performance of electric automobiles also draws more and more attention. The most critical part of the electric automobile is a lithium ion battery, which generally consists of a cathode, an anode, a diaphragm and electrolyte, wherein the performance of the cathode material directly relates to the energy density, the safety performance and the service life of a lithium ion battery. At present, lithium intercalation compounds such as $LiMn_2O_4$, $LiFePO_4$, $LiCoO_2$, and ternary cathode material $Li(Ni)_xCo_yMn_z)O_2$ are commonly adopted as cathode materials of a lithium ion battery. Among them, the ternary cathode materials possess the advantage of higher energy density, and thus being the focus of research in various large battery manufacturers.

In the preparation process of a ternary cathode material, micro powder of the material can be introduced. Especially during a crushing process of the preparation of a single crystal ternary cathode material, the content of the micro powder of the ternary material increases significantly as well as the surface defects of the single crystal ternary material. High micro powder content and high residual lithium will affect the slurry mixing and electrode coating in the electrode preparation process adopting the ternary cathode material, making it easy to produce gelation during the slurry mixing process leading to uneven coating and a too low or too high battery capacity. In this situation, lithium will be released from the electrode during the battery cycle, which will affect the battery life.

**SUMMARY OF THE INVENTION**

The present disclosure aims to provide a ternary cathode material, a preparation method and application thereof, in order to address the shortcomings of current traditional ternary cathode materials. In the preparation method of present disclosure, a nano-scale coating agent is uniformly dispersed in a solvent by stirring so as to contact with the surface of a ternary material evenly. Then a reaction of a niobium compound, a boron compound and a titanium compound with the residual lithium on the surface of the ternary material is introduced by calcinating. During this reaction, micro powder of the ternary material deposits into the crystal defect position on the surface of the ternary material to reduce the micro powder content. The reaction will also consume part of the residual lithium to generate lithium niobate, lithium borate or lithium titanate, which will be uniformly coated on the surface of the ternary material to obtain the claimed ternary cathode material. Therefore, this preparation method will significantly reduce the contents of the micro powder and residual lithium in the material, which is helpful for slurry mixing and coating operation in the electrode preparation process. Meanwhile, the micro powder depositing in the crystal defect position on the surface of the material will effectively repair the material surface defects and synergize with the coating layer to improve the cycle performance and rate performance of the ternary cathode material.

In order to achieve the aforementioned objective, the following technical solution is adopted in the present disclosure.

A ternary cathode material has a chemical formula of $LiNi_xCo_yMn_{(1-x-y)}MO_2$, Wherein $0.5 \leq x \leq 1$, $y \geq 0$, $1-x-y>0$, and M contains at least one element selected from the group consisting of niobium, boron and titanium.

In some embodiments, the ternary cathode material has a $D_{50}$ of 3-6 $\mu m$, and a $K_{90}$ of 1.0-1.6; the ternary cathode material has an operating voltage window of 2.8-4.25V; the ternary cathode material has an initial capacity of 198-202 mAh/g at 0.1C rate, and the capacity retention ratio is 90-96% after 50 cycles at 1C rate.

A preparation method of a ternary cathode material comprises the following steps:

(1) Ball-milling a mixture of a lithium source and a precursor of nickel-cobalt-manganese to obtain a milled powder;
(2) Subsequently subjecting the milled powder to a first calcinating, crushing and screening to obtain a calcinated material;
(3) Adding the calcinated material and a coating agent into a mixed solution of an organic solvent and water to obtain a calcinated material mixture, stirring the calcinated material mixture, and evaporating the calcinated material mixture to dryness to obtain a residue;
(4) Performing a second calcinating to the residue, and followed by cooling to obtain the ternary cathode material;
In step (3), the compound is at least one selected from the group consisting of a niobium compound, a boron compound and a titanium compound.

In some embodiments, in step (1), the precursor of nickel-cobalt-manganese has a chemical formula of $Ni_xCo_yMn_{(1-x-y)}(OH)_2$, Wherein $0.5 \leq x \leq 1$, $y \geq 0$, and $1-x-y>0$.

In some embodiments, in step (1), the lithium source is at least one selected from the group consisting of LiOH and $Li_2CO_3$.

In some embodiments, in step (1), the molar ratio of Li in the lithium source to the total metal elements in the precursor is (1-1.3): 1.

In some embodiments, in step (1), the ball-milling is carried out with a rotation speed of 100-500 rpm for 1-4 h, wherein a ball-to-powder mass ratio is (0.5-2): 1.

In some embodiments, in step (2), the first calcinating is divided into two stage: a first-stage calcinating is carried out at a temperature of 400-800°C for 2-8 h, and the heating rate is 1-10°C/min; a second-stage calcinating is carryout out at a temperature of 650-1100°C for 8-16 h.

In some embodiments, in step (2), the first calcinating is carried out in air or oxygen atmosphere.

In some embodiments, in step (2), the crushing is carried out by jet milling.

In some embodiments, in step (3), the niobium compound is at least one selected from the group consisting of $Nb_2O_5$, $NbS_2$, $C_{10}H_{25}NbO_5$ and $C_4H_4NNbO_9$.

In some embodiments, in step (3), the boron compound is at least one selected from the group consisting of $B_2O_3$, $H_3BO_3$, $LiBO_2$ and $Li_2B_4O_7$.

In some embodiments, in step (3), the titanium compound is at least one selected from the group consisting of $TiO_2$, $Li_2TiO_3$ and titanic acid esters.

In some embodiments, in step (3), the calcinated material and the compounds are in a mass ratio of (0.28-1): 100.

In some embodiments, in step (3), the calcinated material and the mixed solution are in a mass ratio of (0.1-5): 1.

In some embodiments, in step (3), the organic solvent and the water of the mixed solution are in a mass ratio of (0.2-100): 1.

The mixed solution comprising the organic solvent and water is prepared in a mass ratio of (0.2-100): 1, in order to effectively avoid bringing the residual lithium out of the lithium crystal lattice on the surface of the material.

In some other embodiments, in step (3), the organic solvent is at least one selected from the group consisting of ethanol, acetone and isopropanol.

In some embodiments, in step (3), the evaporating to dryness is carried out by a thermostat bath, which is a water bath or oil bath.

In some embodiments, in step (3), the evaporating to dryness is carried out at a temperature of 50-150°C.

In some embodiments, in step (3), the stirring is carried out at a rotation speed of 50-500 rpm.

The calcinated material obtained in step (2) contains undesirable micro powder. In step (3), by mixing with the mixed solution of the organic solvent and water, the micro powder is dispersed evenly on the surface of the calcinated material, and then in the following step, the micro powder is attached to the surface of the ternary cathode material by reacting with the coating agent and depositing in the crystal defect position on the surface of the ternary cathode material. Besides, the coating agent is also dispersed uniformly in the mixed solution, which facilitates the reaction between the coating agent and the residual lithium on surface of the calcinated material, leading to a consumption of the residual lithium thereby the residual lithium content is reduced.

In some embodiments, in step (4), the second calcinating is carried out with a heating rate of 1-10°C/min ,and the second calcinating is carried out at a temperature of 400°C-700°C for 2-10 h.

In some embodiments, in step (4), the second calcinating is carried out in air or an oxygen atmosphere.

The present disclosure also provides a lithium ion battery which comprises the ternary cathode material.

**Beneficial effects**

1. By adopting the reaction between the niobium compound, the boron compound or the titanium compound with the residual lithium on the surface of the calcinated materials, the micro powder deposits in the defect position of the lithium crystal lattice on the surface of the calcinated material, so that the content of the micro powder can be greatly reduced. Meanwhile part of the surface residual lithium is consumed by the reaction to generate lithium niobate, lithium borate or lithium titanate which is uniformly coated on the surface of the material, thereby obtaining the ternary cathode material with excellent cycle and rate performance.

2. In the present disclosure, the coating agent is uniformly dispersed by mixing with the mixed solution of the organic solvent and water. And by adopting the mixed solution with a proper ratio of the organic solvent to water, the residual lithium on surface of the material will not be brought out of the lithium crystal lattice when the calcinated material is dispersed in the mixed solution.

3. The method provided by the present disclosure can reduce the micro powder content and content of the residual lithium on the surface of the material to a great extent, which facilitates a simple and easy operation of slurry mixing and electrode coating in the following electrode preparation process without introducing other complex equipment. And the coating on the ternary cathode material improves the cycle performance and rate capability of the ternary cathode material.

**BRIEF DESCRIPTION OF DRAWINGS**

FIG. 1 is an XRD pattern of the ternary cathode material prepared in example 1 of the present disclosure;
FIG. 2 is an SEM image of the ternary cathode materials prepared in examples 1-3 and comparative example 1 of the present disclosure;

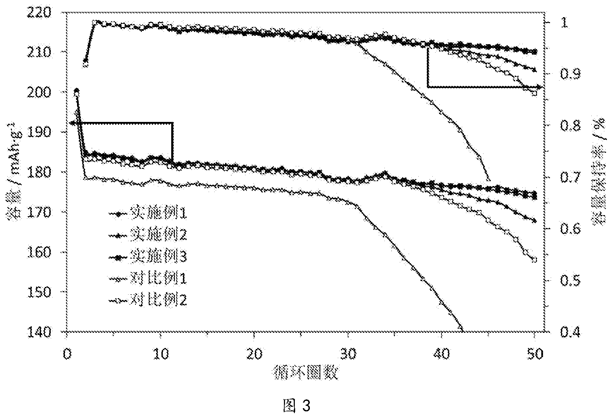

FIG. 3 is a graph showing the cycling stability of the ternary cathode materials prepared in examples 1-3 and comparative examples 1-2 of the present disclosure at a voltage of 2.8-4.25V and a cycling rate of 1C.

**DETAILED DESCRIPTION OF THE ILLUSTRATD EXAMPLES**

In order to fully understand the present disclosure, the preferred experimental scheme of the present disclosure will be described below in conjunction with examples to further illustrate the characteristics and advantages of the present disclosure. Any change or alteration that does not deviate from the gist of the present disclosure can be understood by those skilled in the art. The scope of protection of the present disclosure is determined by the scope of the claims.

Where specific conditions are not indicated in the examples of the present disclosure, it shall be carried out under the conventional conditions or the conditions recommended by the manufacturer. The raw materials, reagents, etc. used without indicating their manufacturers are all conventional products commercially available.

**Example 1**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot H_2O$, and 442.53g of ball milling beads in a ball-milling tank at a rotation speed of 300 rpm for 1 h to obtain a milled powder;
(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°Cfor 12 h; naturally cooling the milled powder to room temperature to obtain a calcinated powder; jet milling and screening the calcinated powder to obtain a calcined material;
(3) Subsequently dispersing 0.43g of $Nb_2O_5$ and the calcinated material in step (2) to 100.43g of a mixed solution of alcohol and water (water: ethanol=1:5) to obtain a mixed liquid, transferring the mixed liquid to an oil bath and stirring it (at a rotation speed of 300 rpm and a temperature of 90°C) until evaporating the mixed liquid to dryness, to obtain the residue;
(4) Placing the residue in step (3) in a clean sagger, transferring the sagger to a box furnace heated at a heating rate of 5°C/min, keeping the residue at 600°C for 6 h, and naturally cooling to room temperature to obtain a ternary cathode material.

The ternary cathode material has a chemical formula of $LiNi_{0.8}Co_{0.1}Mn_{0.1}O_2 \cdot LiNbO_3$.

**Example 2**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot H_2O$, and 442.53g of ball milling beads in a ball-milling tank at a rotation speed of 300 rpm for 1 h to obtain a milled powder;
(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;
(3) Subsequently dispersing 0.43g of $Nb_2O_5$ and 100 g of the calcinated material in step (2) to 200.56g of a mixed solution of alcohol and water (water: ethanol=1:5) to obtain a mixed liquid, transferring the mixed liquid to an oil bath and stirring the mixed liquid (at a rotation of 300 rpm speed and a temperature of 90°C) until evaporating the mixed liquid to dryness, to obtain the residue;

(4) Placing the residue in step (3) in a clean sagger, transferring the sagger to a box furnace heated at a heating rate of 5°C/min, keeping the residue at 600°C for 6 h, and naturally cooling to room temperature to obtain a ternary cathode material.

The ternary cathode material has a chemical formula of $LiNi_{0.8}Co_{0.1}Mn_{0.1}O_2 \cdot LiNbO_3$.

**Example 3**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot H_2O$, and 442.53g of ball milling beads in a ball-milling tank at a rotation speed of 300 rpm for 1 h to obtain a milled powder;

(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;

(3) Subsequently dispersing 0.86g of $Nb_2O_5$ and 100 g of the calcinated material in step (2) to 100.43g of a mixed solution of alcohol and water (water: ethanol=1:5) to obtain a mixed liquid, transferring the mixed liquid to an oil bath and stirring the mixed liquid (at a rotation of 300rpm speed and a temperature of 90°C) until evaporating the mixed liquid to dryness, to obtain a residue;

(4) Placing the residue in step (3) in a clean sagger, transferring the sagger to a box furnace heated at a heating rate of 5°C/min, keeping the residue at 550°C for 6 h, and naturally cooling to room temperature to obtain a ternary cathode material.

The ternary cathode material has a chemical formula of $LiNi_{0.8}Co_{0.1}Mn_{0.1}O_2 \cdot .1\ te_3$.

**Example 4**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot i_2O$, and 442.53g of ball milling beads in a ball-milling tank at a rotation speed of 300 rpm for 1 h to obtain a milled powder;

(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;

(3) Subsequently dispersing 0.97g of $B_2O_3$ and 100 g of the calcinated material in step (2) to 100.43g of a mixed solution of alcohol and water (water: ethanol=1:5) to obtain a mixed liquid, transferring the mixed liquid to an oil bath and stirring the mixed liquid (at a rotation of 300rpm speed and a temperature of 90°C) until evaporating the mixed liquid to dryness, to obtain a residue;

(4) Placing the residue in step (3) in a clean sagger, transferring the sagger to a box furnace heated at a heating rate of 5°C/min, keeping the residue at 300°C for 6 h, and naturally cooling to room temperature to obtain a ternary cathode material.

The ternary cathode material has a chemical formula of $LiNi_{0.8}Co_{0.1}Mn_{0.1}O_2 \cdot .1_3BO_3$.

**Example 5**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot i_2O$, and 442.53g of ball milling beads in a ball-milling tank at a rotation speed of 300 rpm for 1 hour to obtain a milled powder;

(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;

(3) Subsequently dispersing 0.51g of $TiO_2$ and 100 g of the calcinated material in step (2) to 100.43g of a mixed solution of alcohol and water (water: ethanol=1:5) to obtain a mixed liquid, transferring the mixed liquid to an oil bath and stirring the mixed liquid (at a rotation of 300rpm speed and a temperature of 90°C) until evaporating the mixed liquid to dryness, to obtain a residue;

(4) Placing the residue in step (3) in a clean sagger, transferring the sagger to a box furnace heated at a heating rate of 5°C/min, keeping the residue at 600°C for 6 h, and naturally cooling to room temperature to obtain a ternary cathode material.

The ternary cathode material has a chemical formula of $LiNi_{0.8}Co_{0.1}Mn_{0.1}O_2 \cdot Li_2TiO_3$.

**Comparative Example 1**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot H_2O$, and 442.53g of ball milling beads in a ball-milling tank at a rotation speed of 300 rpm for 1 hour to obtain a milled powder;

(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;

(3) Subsequently dispersing 0.43g of $Nb_2O_5$ and 100 g of the calcinated material in step (2) to 100.43g of a mixed solution of alcohol and water (water: ethanol=10: 1) to obtain a mixed liquid, transferring the mixed liquid to an oil bath and stirring the mixed liquid (at a rotation of 300rpm speed and a temperature of 90°C) until evaporating the mixed liquid to dryness, to obtain a residue;

(4) Placing the residue in step (3) in a clean sagger, transferring the sagger to a box furnace heated at a heating rate of 5°C/min, keeping the residue at 600°C for 6 h, and naturally cooling to room temperature to obtain a ternary cathode material.

The ternary cathode material has a chemical formula of $LiNi_{0.8}Co_{0.1}Mn_{0.1}O_2 \cdot LiNbO_3$.

**Comparative Example 2**

A preparation method of the ternary cathode material of this example comprises the following steps:

(1) Ball milling a mixture of 300g of $Ni_{0.8}Co_{0.1}Mn_{0.1}(OH)_2$, 142.53g of $LiOH \cdot i_2O$, and 442.53g of ball milling beads in a ball-milling tank at a rotation speed of 300 rpm for 1 hour to obtain a milled powder;

(2) Removing the ball-milling beads from the milled powder, placing the milled powder in a clean sagger and transferring the sagger to a box furnace heated at a heating rate of 5°C/min; keeping the milled powder at 500°C for 4 h, then keeping the milled powder at 810°C for 12 h; naturally cooling the milled powder to room temperature to obtain a calcinated powder; jet milling and screening the calcinated powder to obtain a calcined material;

(3) Mixing 0.43g of $Nb_2O_5$ and 100 g of the calcinated material in step (2) to obtain a mixture, transferring the mixture to a box furnace heated at a heating rate of 5°C/min, keeping the mixture at 600°C for 6 h, and naturally cooling the mixture to room temperature to obtain a ternary cathode material.

The calcinated material and the ternary cathode material obtained in the Example 1-3 and the Comparative Example 1 have particle distributions as listed in Table 1.

Table 1 Particle size distributions of Example 1-3 and the Comparative Example 1

| Name | D10 ($\mu$m) | D50 ($\mu$m) | D90 ($\mu$m) | D99 ($\mu$m) |
|---|---|---|---|---|
| Calcinated material | 1.61 | 3.30 | 6.87 | 9.03 |
| Example 1 | 2.51 | 4.61 | 8.15 | 11.72 |
| Example 2 | 2.56 | 4.73 | 8.45 | 12.03 |
| Example 3 | 2.43 | 4.58 | 8.22 | 11.82 |
| Comparative Example 1 | 2.31 | 4.51 | 8.26 | 11.88 |

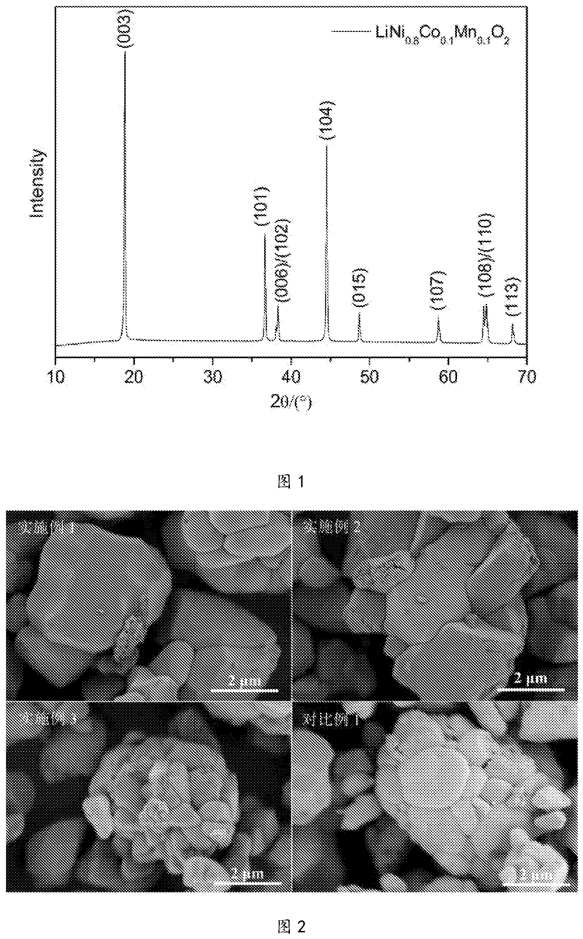

It can be seen from Table 1 that each of the ternary cathode material obtained has a particle size larger than the calcinated material. Combined with the SEM of FIG. 2, it is illustrated that the micro powder of the calcinated material deposits in the defect position of the lithium crystal lattice, indicating that the preparation method of the present disclosure can effectively reduce the micro powder content and repair the surface defects of the material.

Table 2 shows the results of the residual lithium in Examples 1-3 and Comparative Example 1.

Table 2 Results of the residual lithium in Examples 1-3 and Comparative Example 1

| Name | LiOH (wt%) | $Li_2CO_3$ (wt%) | Residual lithium (wt%) |
|---|---|---|---|
| Calcinated material | 0.4325 | 0.2398 | 0.1704 |
| Example 1 | 0.2957 | 0.1961 | 0.1226 |
| Example 2 | 0.3798 | 0.2404 | 0.1552 |
| Example 3 | 0.3227 | 0.2075 | 0.1325 |
| Comparative Example 1 | 0.1174 | 0.0780 | 0.0487 |

It can be seen from Table 2 that the ternary cathode material obtained in Examples 1-3 have lower contents of residual lithium compared with that of the calcinated material, indicating that the preparation method can reduce the residual lithium on the surface. Comparative Example 1 has relatively lower content of residual lithium. The difference between Example 1 and Comparative Example is the ratio of water to alcohol in the mixed solution, indicating that the ratio of water to alcohol is a factor affecting the residual lithium content and lithium lattice structure of the calcinated material.

The ternary cathode material prepared in Example 1-5 and Comparative Example 1-2 was mixed uniformly with the conductive agent acetylene black and the binder PVDF, and then an proper amount of N-methylpyrrolidone (NMP) solvent was added dropwise to prepare a slurry. The slurry is evenly coated on a processed aluminum foil substrate. And after drying, the substrate is punched into a circular cathode sheet and assembled into a button battery for a battery performance test. The test results are shown in Table 3.

Table 3 Performance test of the ternary cathode materials

| Name | $I_{(003)}/I_{(104)}$ | $K_{90} = \dfrac{D_{90} - D_{10}}{D_{50}}$ | Initial capacity (0.1C/ 4.25V, mAh/g) | Capacity retention rate (50 cycles at 1C) |
|---|---|---|---|---|
| Example 1 | 1.33 | 1.22 | 200.4 | 94.48% |
| Example 2 | 1.30 | 1.25 | 200.3 | 90.81% |
| Example 3 | 1.31 | 1.26 | 199.7 | 94.15% |
| Comparative Example 1 | 1.25 | 1.32 | 194.9 | 47.63% |
| Comparative Example 2 | 1.28 | 1.56 | 199.4 | 86.24% |

It can be seen from Table 3 that the initial capacity and capacity retention rate of Examples 1-3 are better than those of Comparative Examples 1 and 2. Among them, $I_{(003)}/I_{(104)}$ value of Example 1 is the highest, which proves that the $Li^+/Ni^{2+}$ cation mixing is the lowest, and the layered structure is relatively intact. The initial capacity of Example 1 is also the highest, and the capacity retention rate is the best. On the contrary, the Comparative Example 1 exhibits the lowest $I_{(003)}/I_{(104)}$ as well as the initial capacity, and the capacity retention rate is the worst, indicating that the ratio of organic solvent to water has a certain impact on the battery performance of the ternary cathode material.

In the above, a ternary cathode material and its preparation method and application provided by the present disclosure have been introduced in detail. Specific examples are used to illustrate the principle and implementation of the present disclosure. The description of the above examples is only used to help understand the method and core idea of the present disclosure, including the best mode, and also enables any skilled in the art to practice the present disclosure, including manufacturing and using any device or system, and implementing any combined method. It should be pointed out that for those of ordinary skill in the art, without departing from the principle of the present disclosure, several improvements and modifications can be made to the present disclosure, and these improvements and modifications also fall within the protection scope of the claims of the present disclosure. The scope of patent protection of the present disclosure is defined by the claims, and may include other embodiments that those skilled in the art can think of. If these other embodiments have structural elements that are not different from the literal expression of the claims, or if they include equivalent structural elements that are not substantially different from the literal expression of the claims, these other embodiments should also be included in the scope of the claims.

## Claims

1. A ternary cathode material, wherein the ternary cathode material has a chemical formula of $LiNi_xCo_yMn_{(1-x-y)}MO_2$, wherein 0.5the , $y \geq 0$, and 1-x-y>0; M comprises an element of at least one selected from the group consisting of niobium, boron, and titanium.

2. A method of preparing the ternary cathode material according to claim 1, comprising the following steps:

   (1) mixing a lithium source and a precursor of nickel-cobalt-manganese to obtain a mixture, ball-milling the mixture to obtain a milled powder;
   (2) subjecting the milled powder to a first calcinating process, crushing, and screening to obtain a calcinated material;
   (3) adding the calcinated material and a compound into a mixed solution of an organic solvent and water to obtain a calcinated material mixture, stirring the calcinated material mixture, and evaporating the calcinated material mixture to dryness to obtain a residue;
   (4) subjecting the residue to a second calcinating process, followed by cooling to obtain the ternary cathode material;

   wherein the compound of step (3) is at least one selected from the group consisting of a niobium compound, a boron compound, and a titanium compound.

3. The method according to claim 2, wherein in step (1), the precursor of nickel-cobalt-manganese has a chemical formula of $Ni_xCo_yMn_{(1-x-y)}(OH)_2$, wherein $0.5 \leq x \leq 1$, $y \geq 0$, and 1-x-y>0.

4. The method according to claim 2, wherein in step (1), the lithium source is at least one selected from the group consisting of LiOH and $Li_2CO_3$.

5. The method according to claim 2, wherein in step (2), the first calcinating process is carried out in two stages: a first-stage calcinating is carried out at a first temperature of 400-800°C for 2-8 h, and at a heating rate of 1-10°C/min; a second-stage calcinating is carried out at a temperature of 650-1 100°C for 8-16 h.

6. The method according to claim 2, wherein in step (3), the niobium compound is at least one selected from the group consisting of $Nb_2O_5$, $NbS_2$, $C_{10}H_{25}NbO_5$, $C_4H_4NNbO_9$, and $LiNbO_3$; and the boron compound is at least one selected from the group consisting of $B_2O_3$, $H_3BO_3$, $LiBO_2$, and $Li_2B_4O_7$; the titanium compound is at least one selected from the group consisting of $TiO_2$, $Li_2TiO_3$, and a titanate ester.

7. The method according to claim 2, wherein in step (3), the calcinated material and the compound are in a mass ratio of (0.28-1): 100; the calcinated material and the mixed solution are in a mass ratio of (0.1-5): 1; the organic solvent and the water of the mixed solution are in a mass ratio of (0.2-100): 1.

8. The method according to claim 2, wherein in step (3), the organic solvent is at least one selected from the group consisting of ethanol, acetone, and isopropanol.

9. The method according to claim 2, wherein in step (4), the second calcinating process is carried out at 400°C-700°C for 2-10 h, at a heating rate of 1-10°C/min; wherein the second calcinating process is carried out in air or an oxygen atmosphere.

10. A battery comprising the ternary cathode material according to claim 1.

图 1

图 2

图 3

## INTERNATIONAL SEARCH REPORT

| International application No. |
| --- |
| **PCT/CN2021/123409** |

### A. CLASSIFICATION OF SUBJECT MATTER

C01G 53/00(2006.01)i; H01M 4/505(2010.01)i; H01M 4/525(2010.01)i; H01M 10/0525(2010.01)i

According to International Patent Classification (IPC) or to both national classification and IPC

### B. FIELDS SEARCHED

Minimum documentation searched (classification system followed by classification symbols)

C01G,H01M

Documentation searched other than minimum documentation to the extent that such documents are included in the fields searched

Electronic data base consulted during the international search (name of data base and, where practicable, search terms used)

CNABS, CNTXT, VEN, WOTXT, EPTXT, USTXT, CNKI, ELSEVIER, 超星读秀: Li, 锂, Ni, 镍, Nb, 铌, "B", 硼, Ti, 钛, 二次, 两次, 二段, 两段, 烧结, 煅烧, 焙烧, 有机溶剂, 醇, 水, 包覆, 包裹, two, twice, calcinat+, calcin+, agglomerat+, sinter+, organic solvent, water, methanol, alcohol, ethanol, propanol, package, pack, wrap, clad

### C. DOCUMENTS CONSIDERED TO BE RELEVANT

| Category* | Citation of document, with indication, where appropriate, of the relevant passages | Relevant to claim No. |
| --- | --- | --- |
| PX | CN 112479267 A (GUANGDONG BRUNP RECYCLING TECHNOLOGY CO., LTD. et al.) 12 March 2021 (2021-03-12) claims 1-10 | 1-10 |
| PX | CN 112479271 A (SHANDONG FENGYUAN CHEMICAL CO., LTD.) 12 March 2021 (2021-03-12) description, paragraphs 7-16 | 1-10 |
| PX | CN 112301428 A (GUANGDONG BRUNP RECYCLING TECHNOLOGY CO., LTD. et al.) 02 February 2021 (2021-02-02) description, paragraphs [0008]-[0035] | 1-10 |
| X | CN 106684323 A (GUANGZHOU CHAOLI NEW ENERGY TECHNOLOGY CO., LTD.) 17 May 2017 (2017-05-17) description paragraphs 7, 23-32 | 1-10 |
| X | CN 110676453 A (SHANDONG NEW POWER COSMO NEW MATERIALS CO., LTD.) 10 January 2020 (2020-01-10) description, paragraphs 9-20 | 1-10 |

☑ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **21 December 2021** | **30 December 2021** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2021/123409** |

**C.    DOCUMENTS CONSIDERED TO BE RELEVANT**

| Category* | Citation of document, with indication, where appropriate, of the relevant passages | Relevant to claim No. |
|---|---|---|
| X | CN 103762352 A (DONGGUAN AMPEREX TECHNOLOGY LIMITED) 30 April 2014 (2014-04-30)<br>  description, paragraphs [0011]-[0021] | 1-10 |
| X | CN 110085831 A (HEFEI UNIVERSITY OF TECHNOLOGY) 02 August 2019 (2019-08-02)<br>  description, paragraphs 7-23 | 1-10 |
| X | CN 106602055 A (GUANGDONG BRUNP RECYCLING TECHNOLOGY CO., LTD. et al.) 26 April 2017 (2017-04-26)<br>  description, paragraphs 7-19 | 1, 10 |
| X | CN 108832103 A (JIANGSU XIANGYING NEW ENERGY TECHNOLOGY CO., LTD.) 16 November 2018 (2018-11-16)<br>  description, paragraphs 7-23 | 1-10 |
| X | CN 105161693 A (HUNAN SOUNDDON NEW ENERGY CO., LTD.) 16 December 2015 (2015-12-16)<br>  description, paragraphs 5-13 | 1-10 |
| X | CN 108899539 A (SHANGHAI UNIVERSITY OF ELECTRIC POWER) 27 November 2018 (2018-11-27)<br>  description, paragraph 8 | 1, 10 |
| X | CN 110943219 A (CNGR ADVANCED MATERIAL CO., LTD.) 31 March 2020 (2020-03-31)<br>  description, paragraphs 9-26 | 1-10 |
| X | 李卫 等 (LI, Wei et al,). "LiMg_(0.03)(Ni_(0.77)Co_(0.1)Mn_(0.1))O_2·B_2O_3球形高镍材料的制备与性能 (Preparation and Performance of Spherical High Nickel Material LiMg0.03(Ni0.77Co0.1Mn0.1)O2·B2O3)"<br>中国有色金属学报 *(The Chinese Journal of Nonferrous Metals)*,<br>Vol. 25, No. 10, 31 October 2015 (2015-10-31),<br>ISSN: ,<br>  pp. 2753-2754 | 1-10 |

Form PCT/ISA/210 (second sheet) (January 2015)

## INTERNATIONAL SEARCH REPORT
### Information on patent family members

| International application No. |
| --- |
| **PCT/CN2021/123409** |

| Patent document cited in search report | | | Publication date (day/month/year) | Patent family member(s) | | | Publication date (day/month/year) |
| --- | --- | --- | --- | --- | --- | --- | --- |
| CN | 112479267 | A | 12 March 2021 | None | | | |
| CN | 112479271 | A | 12 March 2021 | None | | | |
| CN | 112301428 | A | 02 February 2021 | None | | | |
| CN | 106684323 | A | 17 May 2017 | CN | 106684323 | B | 01 June 2018 |
| CN | 110676453 | A | 10 January 2020 | None | | | |
| CN | 103762352 | A | 30 April 2014 | CN | 103762352 | B | 06 April 2016 |
| CN | 110085831 | A | 02 August 2019 | None | | | |
| CN | 106602055 | A | 26 April 2017 | None | | | |
| CN | 108832103 | A | 16 November 2018 | CN | 108832103 | B | 02 April 2021 |
| CN | 105161693 | A | 16 December 2015 | CN | 105161693 | B | 23 November 2018 |
| CN | 108899539 | A | 27 November 2018 | None | | | |
| CN | 110943219 | A | 31 March 2020 | None | | | |

Form PCT/ISA/210 (patent family annex) (January 2015)